# FASCICULE DE BREVET EUROPEEN

(11) **EP 1 202 299 B1**
(45) Date de publication et mention de la délivrance du brevet: **16.08.2006**
(21) Numéro de dépôt: 00810995.1
(22) Date de dépôt: 25.10.2000
(51) Int. Cl.: H01G 4/232, H01G 4/01

(54) **Dispositif d'accumulation d'énergie électrique constitué par enroulement de rubans superposés et procédé de fabrication**
Aus übereinander gewickelten Bändern bestehende Vorrichtung zur elektrischen Energiespeicherung und Herstellungsverfahren
Electrical energy accumulating device consisting of wound strips and its manufacturing method

(43) Date de publication de la demande: 02.05.2002
(73) Titulaire: Maxwell Technologies SA, 1728 Rossens (CH)
(72) Inventeur: Gallay, Roland, 1726 Farvagny (CH); Guillet, Dominique, 1723 Marly (CH); Hermann, Vincent, 1700 Fribourg (CH); Schneuwly, Adrian, 3185 Schmitten (CH)
(74) Mandataire: BOVARD AG

(56) Documents cités:
- DE-A- 3 137 593
- GB-A- 1 425 026

## Description

L'invention se rapporte à un dispositif d'accumulation d'énergie électrique constitué par enroulement de rubans superposés.

L'invention se rapporte également à un procédé de fabrication d'un dispositif d'accumulation d'énergie électrique constitué par enroulement de rubans superposés.

L'invention s'applique avantageusement, mais non limitativement, à la fabrication de condensateurs de type électrochimiques.

Il est connu de longue date de fabriquer des condensateurs par enroulement spiralé de plusieurs rubans en différents matériaux qui sont préalablement superposés.

Classiquement, deux des rubans sont en matériau conducteur de l'électricité de manière à constituer les deux électrodes du condensateur et, ces rubans électrodes sont chacun reliés par au moins un élément collecteur à une borne de connexion électrique externe au condensateur.

Les enroulements ainsi fabriqués ont généralement une forme sensiblement cylindrique, de révolution ou aplatie, et présentent une face latérale sensiblement cylindrique ainsi que deux faces extrêmes opposées.

Ces enroulements sont généralement revêtus d'une enveloppe de protection constituée en matériau électriquement isolant et à laquelle les bornes de connexion électrique sont fixées.

Tel que cela est exposé dans le brevet des Etats Unis d'Amérique du Nord n° 4,633,369, pour constituer les éléments collecteurs qui relient les électrodes aux bornes d'un condensateur obtenu par enroulement de rubans, il est connu de décaler les deux rubans électrodes par rapport à un plan médian orthogonal à l'enroulement, de manière telle qu'après enroulement, chacun de ces rubans présente, au droit d'une des faces extrêmes de l'enroulement, une rive qui est libre sur la valeur du décalage.

La valeur de décalage est choisie de manière telle qu'un élément métallique puisse être agrafé, pincé ou soudé sur la partie conductrice formée à chaque extrémité du condensateur et par cela constituer un élément collecteur qui peut lui-même être relié à une borne électrique dudit condensateur.

Cette solution technique donne satisfaction au plan de l'efficacité de la connexion et de la section de passage mais elle est très pénalisante au plan de l'encombrement longitudinal du dispositif.

Tel que cela est connu GB-A-1 425 026, les éléments collecteurs qui relient les électrodes aux bornes peuvent également être constitués au moyen de languettes d'épaisseur réduite.

Ces languettes sont réalisées en matériau conducteur de l'électricité et sont disposés contre une face des rubans pour, après bobinage, d'une part, être retenues par pincement dans l'enroulement et, d'autre part, présenter chacune une partie constituant une dent qui s'étend en saillie sur l'une des faces extrêmes de l'enroulement.

Les dents qui sont en saillies sur au moins l'une des faces extrêmes du dispositif, forment au moins un ensemble dans lequel elles sont sensiblement superposées dans une direction déterminée, approximativement perpendiculaire à un plan tangent à la face cylindrique dudit dispositif, de manière à constituer un groupe d'éléments de liaison électrique à une borne.

Cette solution est avantageuse au plan de l'encombrement longitudinal du dispositif, mais est pénalisante au plan de son encombrement transversal, du fait de la surépaisseur que constitue la somme des épaisseurs des languettes.

A cet effet, l'invention à pour objet un dispositif d'accumulation d'énergie électrique selon la revendication 1.

L'invention a également pour objet un procédé de fabrication d'un dispositif du type précité selon la revendication 7 ou la revendication 11.

L'invention sera bien comprise à la lecture de la description ci-après faite à titre d'exemple non limitatif, en regard du dessin ci-annexé qui représente schématiquement :

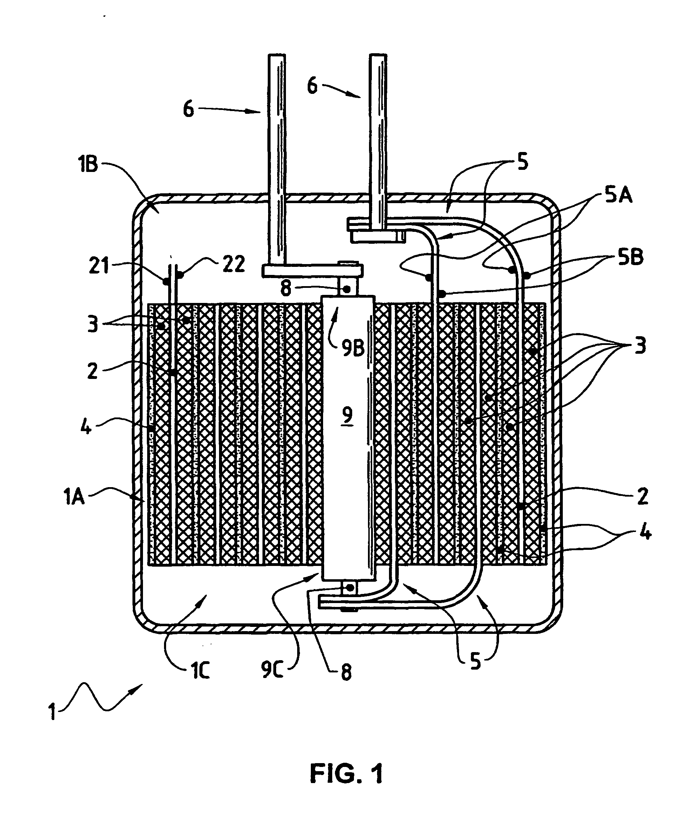

Figure 1 : une vue en coupe longitudinale d'un dispositif selon l'invention,

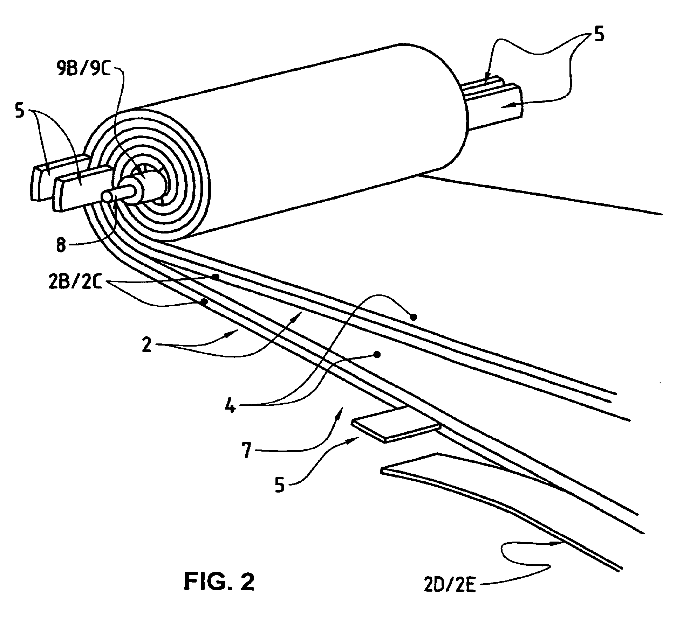

Figure 2 : vu en perspective, le dispositif de l'invention, au cours de sa réalisation, selon une forme préférée du procédé de fabrication de l'invention,

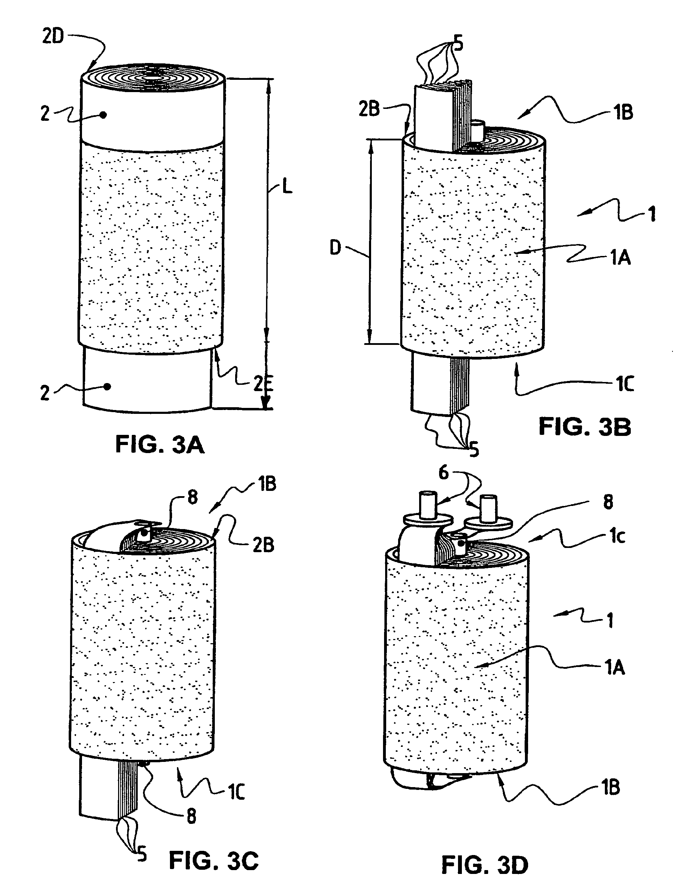

Figures 3A à 3D : quatre vues en perspective de quatre étapes de fabrication d'un dispositif selon l'invention.

En se reportant au dessin, on voit un dispositif 1 d'accumulation d'énergie électrique comprenant un enroulement sensiblement cylindrique de rubans 2, dont au moins un ruban 2 conducteur de l'électricité.

Ce dispositif 1 est transversalement déterminé par une face latérale 1A sensiblement cylindrique et longitudinalement par deux faces extrêmes 1B, 1C opposées qui contiennent chacune une rive 2B, 2C dudit ruban 2 conducteur de l'électricité.

Avantageusement, le dispositif 1 est un condensateur électrochimique constitué par enroulement spiralé de plusieurs rubans 2, 4 superposés.

Par ruban conducteur de l'électricité, on désigne un ruban 2 qui, est au moins superficiellement conducteur de l'électricité.

Avantageusement, mais non limitativement, chaque ruban 2 conducteur de l'électricité est constitué d'aluminium.

Dans un mode d'application de l'invention à la réalisation de condensateurs électrochimiques, le dispositif comprend deux rubans 2 conducteur de l'électricité qui sont superposés.

Chaque ruban 2 conducteur de l'électricité présente deux faces opposées 21, 22, dont une 21, dite première, porte une couche 3 de matériau permettant une grande activité électrochimique et, l'autre 22, dite seconde, porte également une couche 3 de matériau permettant une grande activité électrochimique, quant à elle recouverte par un élément 4 en couche, dit élément séparateur 4.

L'indication selon laquelle chaque face 21, 22 du ruban 2 conducteur de l'électricité porte une couche 3 de matériau permettant une grande activité électrochimique comprend notamment le fait que cette couche 3 est constituée par dépôt de matériau permettant une grande activité électrochimique sur la dite face 21, 22 ou par application d'un ruban de matériau permettant une grande activité électrochimique.

Egalement, l'indication selon laquelle la face seconde 22 du ruban 2 conducteur de l'électricité porte une couche 3 de matériau permettant une grande activité électrochimique, elle-même recouverte par l'élément 4 séparateur, comprend notamment le fait que cet élément séparateur 4 est constitué par dépôt d'un matériau sur la couche 3 de matériau permettant une grande activité électrochimique ou par application d'un ruban de ce matériau.

Dans le mode d'application de l'invention à la réalisation de condensateurs électrochimiques, la couche 4 séparatrice est constituée en un matériau qui est un isolant électronique et un conducteur ionique lorsqu'il est imprégné d'un agent électrolyte.

Par exemple, l'électrolyte est un liquide ou un polymère qui imprègne les couches 3 de matériau permettant une grande activité électrochimique et l'élément séparateur 4.

Dans le mode d'application de l'invention à la réalisation de condensateurs électrochimiques, le matériau est, de manière non exhaustive, du carbone (charbon actif, graphite, noir de carbone), ou des oxydes de terre rare, des mousses de métal, etc.

Tel que cela apparaît au dessin, chacun des rubans 2 conducteur de l'électricité constitue l'une des électrodes du condensateur et est relié par au moins un élément de liaison électrique 5 à au moins une borne 6 de connexion électrique qui est externe au condensateur 1.

Dans l'exemple de réalisation représenté, le dispositif 1 comprend une enveloppe protectrice 1D, constituée par une paroi 1D, par exemple, rigide, notamment en matériau électriquement isolant.

Ce dispositif est remarquable en ce qu'au moins l'une des rives 2B, 2C d'au moins un ruban 2 conducteur de l'électricité comporte une pluralité de dents 5 disposées de manière telle que sur au moins l'une des faces extrêmes 1B,1C du dispositif 1, elles forment au moins un ensemble dans lequel elles sont sensiblement superposées dans une direction déterminée, approximativement perpendiculaire à un plan tangent à la face cylindrique 1A dudit dispositif, de manière à constituer un groupe d'éléments 5 de liaison électrique à une borne 6 et dans lequel chaque élément 5 s'étend en continuité avec le ruban 2 qui le comporte.

Ces caractéristiques techniques permettent que le dispositif 1 soit équipé de groupes d'éléments collecteurs d'électricité qui constituent chacun un conducteur électrique dont la section transversale est considérable sans pour autant être pénalisante au plan du volume qu'elle occupe sur chaque face 1B, 1C extrême concernée dudit dispositif 1.

Le dispositif d'accumulation 1 d'énergie électrique est également remarquable en ce que, d'une part, chaque ruban 2 conducteur de l'électricité qui, comportant des dents 5, est utilisé pour constituer le dispositif, a une largeur initiale L supérieure à la distance D qui sépare les faces extrêmes 1B, 1C de l'enroulement et, d'autre part, les dents 5 sont obtenues par découpe de créneaux 7 dans au moins un bord latéral 2D, 2E dudit ruban 2 conducteur de l'électricité.

Par largeur initiale L du ruban 2 conducteur de l'électricité, on désigne la largeur qui peut ou pourrait être mesurée entre ses deux bords latéraux 2D, 2E avant découpe des créneaux 7.

Le respect de ces caractéristiques techniques permet de garantir que chaque dent 5 est en continuité avec le ruban 2 conducteur de l'électricité qui la comporte et qu'il n'y ait donc pas de rupture de la liaison électrique recherchée.

Le dispositif d'accumulation 1 d'énergie électrique est encore remarquable en ce que, d'une part, dans chaque ensemble où elles se trouvent superposées les dents 5 sont, au moins localement, étroitement appliquées les unes contre les autres par leurs faces en vis à vis 5A, 5B, de manière à établir un contact électrique entre elles et, d'autre part, elles sont au moins indirectement reliées à une borne 6 de connexion électrique externe au dispositif 1.

Le respect de ces caractéristiques techniques permet d'établir une liaison électrique de qualité avec chaque borne 6 de connexion électrique externe au dispositif 1.

Le dispositif 1 d'accumulation d'énergie électrique est aussi remarquable en ce que, dans chaque ensemble où elles se trouvent superposées, les dents 5 sont étroitement appliquées les unes contre les autres par rivetage au moyen d'un organe 8 engagé à travers l'épaisseur de l'ensemble desdites dents 5.

Par exemple, une broche 8 est engagée à travers l'épaisseur de l'ensemble desdites dents 5, puis son extrémité est déformée de manière à verrouiller l'assemblage.

Dans une variante, le dispositif d'accumulation d'énergie électrique est aussi remarquable en ce que, dans chaque ensemble où elles se trouvent superposées, les dents 5 sont étroitement appliquées les unes contre les autres par soudure.

Cette solution n'exclut par la mise en oeuvre de la broche 8 précitée. Dans une forme de réalisation, le dispositif 1 comprend au moins un ensemble de dents 5 sur chacune de ces faces extrêmes 1B, 1C et chacun de ces ensembles est relié à une borne 6 située au niveau de la dite face 1B, 1C.

Dans une autre forme de réalisation, le dispositif 1 :
- comprend une pièce 9 conductrice de l'électricité disposée sensiblement axialement à l'enroulement et qui présente une extrémité 9B, 9C dépassant au-dessus de chacune des faces extrêmes 1B,1C du dispositif,
- au niveau d'une première 1B des faces extrêmes 1B, 1C du dispositif 1, au moins un premier ensemble de dents 5 est au moins directement connecté à une première extrémité 9B de la pièce conductrice 9 qui se trouve au niveau de cette première face extrême 1B,
- au niveau de la deuxième face extrême 1C, la deuxième extrémité 9B de la pièce conductrice 9 est quant à elle connectée à une première borne 6, tandis qu'au moins un deuxième ensemble de dents 5 situé au niveau de cette deuxième face 1C se trouve lui-même connecté à une deuxième borne 6.

L'invention a également pour objet un procédé de fabrication d'un dispositif 1 d'accumulation d'énergie électrique, d'une part, transversalement déterminé par une face latérale 1A sensiblement cylindrique et longitudinalement par deux faces extrêmes 1B, 1C opposées séparées d'une distance D et, d'autre part, obtenu par enroulement de rubans 2, 4 dont au moins un ruban 2 conducteur de l'électricité dont la largeur initiale L, déterminée entre deux bords latéraux 2D, 2E, est supérieure à la distance D qui sépare lesdites faces extrêmes 1B, 1C opposées.

Le procédé selon l'invention est remarquable en ce que c'est au plus tard à l'issue de l'enroulement des rubans 2, 4 qu'on réalise les dents 5 par découpe des créneaux 7 dans au moins l'un des deux bords latéraux 2D, 2E qui déterminent la largeur initiale L d'au moins un ruban 2 conducteur de l'électricité.

De préférence, on réalise les créneaux après l'enroulement. Dans une variante de réalisation, on réalise la découpe des créneaux 7 déterminant chaque dent 5, sensiblement préalablement à l'enroulement de la partie de ruban 2 qui doit porter cette dent 5.

Cette technique permet de réaliser les dents au fur et à mesure de l'enroulement de chaque ruban à équiper de dents, ce qui permet de la mettre en oeuvre sur des machines de bobinage, sans réelles difficultés techniques et sans que cela ne se répercute sur la haute productivité de ce type de machine.

Suivant une variante également remarquable du procédé, on réalise au moins une partie des créneaux 7 qui délimitent les dents 5, préalablement à l'enroulement d'au moins un ruban 2 conducteur de l'électricité.

De manière remarquable, on réalise l'ensemble des créneaux 7 qui délimitent les dents 5, préalablement à l'enroulement du ruban 2 conducteur de l'électricité.

De manière remarquable,
- on procède à l'enroulement de rubans 2, 4 autour d'une pièce 9 conductrice de l'électricité de longueur telle qu'elle puisse, au moins à l'issue de la fabrication du dispositif, présenter une extrémité 9B, 9C dépassant au-dessus de chacune des faces extrêmes 1B, 1C dudit dispositif 1
- au plus tard après l'enroulement, on constitue des dents 5 sur deux rubans 2 conducteurs de l'électricité de manière telle que chacune des deux faces extrêmes 1B, 1C du dispositif 1, puisse être équipée d'au moins un ensemble de dents 5,
- au niveau d'une première face extrême 1B de l'enroulement, on connecte au moins un premier ensemble de dents 5 à une première extrémité 9B de la pièce conductrice 9 qui se trouve au niveau de cette face extrême 1B,
- au niveau de la deuxième face extrême 1C, on connecte, d'une part, la deuxième extrémité 9B de la pièce conductrice 9 à une première borne 6 et, d'autre part, au moins un ensemble de dents 5 situé au niveau de cette deuxième face à une deuxième borne 6.

Cependant, cette dernière technique n'exclut pas la fabrication de dispositifs qui sont aplatis après retrait d'un mandrin amovible sur lequel ils ont été préalablement constitués.

De manière remarquable, on met en oeuvre au moins un ruban 2 conducteur de l'électricité présentant deux faces opposées 21, 22, dont une 21, dite première, porte une couche 3 de matériau permettant une grande activité électrochimique et, l'autre 22, dite seconde porte également une couche 3 de matériau permettant une grande activité électrochimique, quant à elle recouverte par un élément 4 en couche, dit élément séparateur 4.

De manière également remarquable, on met en oeuvre au moins un ruban 2 conducteur de l'électricité dont les couches 3 de matériau permettant une grande activité électrochimique et l'élément séparateur 4 qui équipent les deux faces opposées 21, 22, s'étendent, depuis l'un des deux bord latéraux 2D, 2E, sur une dimension transversale sensiblement égale à la distance D qui sépare les deux faces extrêmes 1B, 1C du dispositif 1.

Par cela chaque face 21, 22 du ruban 2 conducteur de l'électricité présente une fraction non revêtue qui est particulièrement adaptée à la réalisation des dents 5.

## Revendications

1. Dispositif (1) d'accumulation d'énergie électrique comprenant un enroulement sensiblement cylindrique de rubans (2, 4) dont au moins un ruban (2) conducteur de l'électricité, ce dispositif (1) étant transversalement déterminé par une face latérale (1A) sensiblement cylindrique et longitudinalement par deux faces extrêmes opposées (1B, 1C) qui contiennent chacune une rive (2B, 2C) dudit ruban (2) conducteur de l'électricité, ce dispositif étant **caractérisé,**
- **en ce qu'**au moins l'une des rives (2B, 2C) d'au moins un ruban (2) conducteur de l'électricité comporte une pluralité de dents (5) disposées de manière telle que sur au moins l'une des faces extrêmes (1B, 1C) du dispositif (1), elles forment au moins un ensemble dans lequel elles sont sensiblement superposées dans une direction déterminée, approximativement perpendiculaire à un plan tangent à la face cylindrique (1A) dudit dispositif, de manière à constituer un groupe d'éléments (5) de liaison électrique à une borne (6) et dans lequel chaque élément (5) s'étend en continuité avec le ruban (2) conducteur de l'électricité qui le comporte,
- **en ce que**, d'une part, chaque ruban (2) qui, comportant des dents (5), est utilisé pour constituer le dispositif, a une largeur initiale (L) supérieure à la distance (D) qui sépare les faces extrêmes (1B, 1C) de l'enroulement et, d'autre part, les dents (5) sont obtenues par découpe de créneaux (7) dans au moins un bord latéral (2D, 2E) dudit ruban (2) conducteur de l'électricité.

2. Dispositif d'accumulation d'énergie électrique selon la revendication 1, **caractérisé en ce que**, d'une part, dans chaque ensemble où elles se trouvent superposées les dents (5) sont, au moins localement, étroitement appliquées les unes contre les autres par leurs faces en vis à vis (5A, 5B), de manière à établir un contact électrique entre elles et, d'autre part, elles sont au moins indirectement reliées à une borne (6) de connexion électrique externe au dispositif (1).

3. Dispositif d'accumulation d'énergie électrique selon la revendication 2, **caractérisé en ce que** dans chaque ensemble où elles se trouvent superposées, les dents (5) sont étroitement appliquées les unes contre les autres par rivetage au moyen d'un organe (8) engagé à travers l'épaisseur de l'ensemble desdites dents (5).

4. Dispositif d'accumulation d'énergie électrique selon la revendication 2, **caractérisé en ce que** dans chaque ensemble où elles se trouvent superposées, les dents (5) sont étroitement appliquées les unes contre les autres par soudure.

5. Dispositif d'accumulation d'énergie électrique selon l'une des revendications 2 à 4, **caractérisé en ce qu'**il comprend au moins un ensemble de dents (5) sur chacune de ces faces extrêmes (1B, 1C) et chacun de ces ensembles est relié à une borne (6) située au niveau de la dite face (1B, 1C).

6. Dispositif d'accumulation d'énergie électrique selon l'une des revendications 2 à 5, **caractérisé en ce qu'**il comprend :
- une pièce (9) conductrice de l'électricité disposée sensiblement axialement à l'enroulement et qui présente une extrémité (9B, 9C) dépassant au-dessus de chacune des faces extrêmes (1B, 1C) du dispositif,
- au niveau d'une première (1B) des faces extrêmes (1B, 1C) du dispositif (1), au moins un premier ensemble de dents (5) est au moins directement connecté à une première extrémité (9B) de la pièce conductrice (9) qui se trouve au niveau de cette première face extrême (1B),
- au niveau de la deuxième face extrême (1C), la deuxième extrémité (9B) de la pièce conductrice (9) est quant à elle connectée à une première borne (6), tandis qu'au moins un deuxième ensemble de dents (5) situé au niveau de cette deuxième face (1C) se trouve lui-même connecté à une deuxième borne (6).

7. Procédé de fabrication d'un dispositif (1) d'accumulation d'énergie électrique, d'une part, transversalement déterminé par une face latérale (1A) sensiblement cylindrique et longitudinalement par deux faces extrêmes (1B, 1C) opposées séparées d'une distance (D) et, d'autre part, obtenu par enroulement de rubans (2, 4) dont au moins un ruban (2) conducteur de l'électricité dont la largeur initiale (L), déterminée entre deux bords latéraux (2D, 2E), est supérieure à la distance (D) qui sépare lesdites faces extrêmes (1B, 1C) opposées, ce procédé étant **caractérisé en ce que** c'est au plus tard à l'issue de l'enroulement des rubans (2, 4) qu'on réalise les dents (5) par découpe de créneaux (7) dans au moins l'un des deux bords latéraux (2D, 2E) qui déterminent la largeur initiale (L) d'au moins un ruban (2) conducteur de l'électricité.

8. Procédé de fabrication selon la revendication 7, **caractérisé en ce qu'**on réalise la découpe des créneaux (7) déterminant chaque dent (5), sensiblement préalablement à l'enroulement de la partie de ruban (2) conducteur de l'électricité qui doit porter cette dent (5).

9. Procédé de fabrication selon la revendication 7, **caractérisé en ce qu'**on réalise au moins une partie des créneaux (7) qui délimitent les dents (5), préalablement à l'enroulement d'au moins un ruban (2) conducteur de l'électricité.

10. Procédé de fabrication selon la revendication 7, **caractérisé en ce qu'**on réalise l'ensemble des créneaux (7) qui délimitent les dents (5), préalablement à l'enroulement d'au moins un ruban (2) conducteur de l'électricité.

11. Procédé de fabrication d'un dispositif (1) d'accumulation d'énergie électrique, d'une part, transversalement déterminé par une face latérale (1A) sensiblement cylindrique et longitudinalement par deux faces extrêmes (1B, 1C) opposées séparées d'une distance (D) et, d'autre part, obtenu par enroulement de rubans (2, 4) dont au moins un ruban (2) conducteur de l'électricité dont la largeur initiale (L), déterminée entre deux bords latéraux (2D, 2E), est supérieure à la distance (D) qui sépare lesdites faces extrêmes (1B, 1C) opposées, une pluralité de dents (5) disposées de manière telle que sur au moins l'une des faces extrêmes (1B, 1C) du dispositif (1), elles forment au moins un ensemble dans lequel elles sont sensiblement superposées dans une direction déterminée, approximativement perpendiculaire à un plan tangent à la face cylindrique (1A) dudit dispositif, de manière à constituer un groupe d'éléments (5) de liaison électrique à une borne (6), ce procédé étant **caractérisé en ce que** :
- on met en oeuvre au moins un ruban (2) conducteur de l'électricité présentant deux faces opposées (21, 22), dont une (21), dite première, porte une couche (3) de matériau permettant une grande activité électrochimique et, l'autre (22), dite seconde porte également une couche (3) de matériau permettant une grande activité électrochimique, quant à elle recouverte par un élément (4) en couche, dit élément séparateur (4).
- on procède à l'enroulement de rubans (2) autour d'une pièce (9) conductrice de l'électricité de longueur telle qu'elle puisse, au moins à l'issue de la fabrication du dispositif, présenter une extrémité (9B, 9C) dépassant au-dessus de chacune des faces extrêmes (1B,1C) dudit dispositif (1),
- au plus tard après l'enroulement, on constitue les dents (5) sur deux rubans (2) conducteurs de l'électricité de manière telle que chacune des deux faces extrêmes (1B, 1C) du dispositif (1), puisse être équipée d'au moins un ensemble de dents (5), on réalise les dents (5) par découpe des créneaux (7) dans au moins l'un des deux bords latéraux (2D, 2E) qui déterminent la largeur initiale (L) d'au moins un ruban (2) conducteur de l'électricité,
- au niveau d'une première face extrême (1B) de l'enroulement, on connecte au moins un premier ensemble de dents (5) à une première extrémité (9B) de la pièce conductrice (9) qui se trouve au niveau de cette face extrême (1B),
- au niveau de la deuxième face extrême (1C), on connecte, d'une part, la deuxième extrémité (9B) de la pièce conductrice (9) à une première borne (6) et, d'autre part, au moins un ensemble de dents (5) situé au niveau de cette deuxième face à une deuxième borne (6).

12. Procédé de fabrication selon l'une des revendications 7 à 10, **caractérisé en ce qu'**on met en oeuvre au moins un ruban (2) conducteur de l'électricité présentant deux faces opposées (21, 22), dont une (21), dite première, porte une couche (3) de matériau permettant une grande activité électrochimique et, l'autre (22), dite seconde porte également une couche (3) de matériau permettant une grande activité électrochimique, quant à elle recouverte par un élément (4) en couche, dit élément séparateur (4).

13. Procédé de fabrication selon la revendication 11 ou 12, **caractérisé en ce qu'**on met en oeuvre au moins un ruban (2) conducteur de l'électricité dont les couches (3) de matériau permettant une grande activité électrochimique et l'élément séparateur (4) qui équipent les deux faces opposées (21, 22), s'étendent, depuis l'un des deux bord latéraux (2D, 2E), sur une dimension transversale sensiblement égale à la distance (D) qui sépare les deux faces extrêmes (1B, 1C) du dispositif (1).

## Claims

1. Device (1) for accumulating electrical energy comprising a substantially cylindrical winding of strips (2) at least one of which is an electrical strip conductor (2), this device (1) being defined transversally by a substantially cylindrical lateral face (1A) and longitudinally by two opposite end faces (1B, 1C) which each contain an edge (2B, 2C) of said electrical strip conductor (2), this device being **characterised**
- **in that** at least one of the edges (2B, 2C) of at least one electrical strip conductor (2) includes a plurality of teeth (5) disposed in such a way that on at least one of the end faces (1B, 1C) of the device (1) they form at least one set in which they are substantially superimposed in a predetermined direction, approximately perpendicular to a plane tangent to the cylindrical face (1A) of said device, in such a way as to constitute a group of elements (5) of electrical connection to a terminal (6) and in which each element (5) extends in continuity with the electrical strip conductor (2) which comprises it,
- **in that**, on the one hand, each strip (2), including teeth (5), which is used to constitute the device has an initial width (L) greater than the distance (D) which separates the end faces (1B, 1C) of the winding, and, on the other hand, the teeth (5) are obtained by cutting notches (7) in at least one lateral border (2D, 2E) of said electrical strip conductor (2).

2. Device for accumulating electrical energy according to claim 1, **characterised in that**, on the one hand, in each set where the teeth (5) are superimposed, they are, at least locally, applied tightly against one another by their opposite faces (5A, 5B) in such a way as to establish electrical contact between them, and, on the other hand, they are at least indirectly connected to an electrical connection terminal (6), external to the device (1).

3. Device for accumulating electrical energy according to claim 2, **characterised in that** in each set where the teeth (5) are situated superimposed, they are, at least locally, applied tightly against one another by riveting by means of an element (8) inserted through the thickness of the set of said teeth (5).

4. Device for accumulating electrical energy according to claim 2, **characterised in that** in each set where the teeth (5) are situated superimposed, they are, at least locally, applied tightly against one another by soldering.

5. Device for accumulating electrical energy according to one of the claims 2 to 4, **characterised in that** it comprises at least one set of teeth (5) on each of said end faces (1B, 1C), and each of said sets is connected to a terminal (6) situated at the level of said face (1B, 1C).

6. Device for accumulating electrical energy according to one of the claims 2 to 5, **characterised in that** it comprises:
- an electrical conducting element (9) disposed substantially axially with respect to the winding and which has an end (9B, 9C) jutting out over each of the end faces (1 B, 1 C) of the device,
- at the level of a first (1 B) of the end faces (1B, 1C) of the device (1), at least one first set of teeth (5) is connected at least directly to a first end (9B) of the conducting element (9) which is situated at the level of this first end face (1 B),
- at the level of the second end face (1C), the second end (9B) of the conducting element (9) is, for its part, connected to a first terminal (6), whereas at least a second set of teeth (5) situated at the level of this second face (1C) is itself connected to a second terminal (6).

7. Method of producing a device (1) for accumulating electrical energy, on the one hand, defined transversally by a substantially cylindrical lateral face (1 A) and longitudinally by two opposite end faces (1B, 1C) separated by a distance (D), and, on the other hand, obtained by winding strips (2, 4) at least one of which being an electrical strip conductor (2) whose initial width (L), defined between two lateral borders (2D, 2E), is greater than the distance (D) that separates said opposite end faces (1B, 1C), this method being **characterised in that** it is at the latest after the strips (2) have been wound that the teeth (5) are achieved by cutting notches (7) in at least one of the two lateral borders (2D, 2E) which determine the initial width (L) of at least one electrical strip conductor (2).

8. Method of production according to claim 7, **characterised in that** the cutting of the notches (7) determining each tooth (5) is achieved substantially prior to the winding of the part of the electrical strip conductor (2) that has to bear this tooth (5).

9. Method of production according to claim 7, **characterised in that** at least part of the notches (7) which delimit the teeth (5) are achieved prior to the winding of at least one electrical strip conductor (2).

10. Method of production according to claim 7, **characterised in that** all the notches (7) that delimit the teeth (5) are achieved prior to the winding of at least one electrical strip conductor (2).

11. Method of producing a device (1) for accumulating electrical energy, on the one hand, defined transversally by a substantially cylindrical lateral face (1A) and longitudinally by two opposite end faces (1B, 1C) separated by a distance (D), and, on the other hand, obtained by winding strips (2) at least one of which being an electrical strip conductor (2) whose initial width (L), defined between two lateral borders (2D, 2E), is greater than the distance (D) that separates said opposite end faces (1B, 1C), a plurality of teeth (5) disposed in such a way that on at least one of the end faces (1B, 1C) of the device (1) they form at least one set in which they are substantially superimposed in a predetermined direction, approximately perpendicular to a plane tangent to the cylindrical face (1A) of said device, in such a way as to constitute a group of elements (5) of electrical connection to a terminal (6), this method being
**characterised in that**:
- at least one electrical strip conductor (2) is used having two opposite faces (21, 22), one of which, referred to as the first, bears a layer (3) of material permitting a high degree of electrochemical activity, and the other (22), referred to as the second, likewise bears a layer (3) of material permitting a high degree of electrochemical activity, itself covered by a layer element (4), referred to as separator element (4)
- the winding of the strips (2) is carried out around an electrical conductor element (9) of length such that it is able, at least after the device has been made, to have one end (9B, 9C) jutting out over each of the end faces (1B, 1C) of said device (1),
- at the latest after the winding, teeth (5) are formed on two electrical strip conductors (2) in such a way that each of the two end faces (1B, 1C) of the device (1) is able to be provided with at least one set of teeth (5), the teeth (5) are achieved by cutting notches (7) in at least one of the two lateral borders (2D, 2E) which define the initial width (L) of at least one electrical strip conductor (2)
- at the level of a first end face (1B) of the winding, at least one first set of teeth (5) is connected to a first end (9B) of the conducting element which is situated at the level of this end face (1B),
- at the level of the second end face (1C), on the one hand, the second end (9B) of the conducing element (9) is connected to a first terminal (6), and, on the other hand, at least one set of teeth (5) situated at the level of this second face is connected to a second terminal (6).

12. Method of production according to one of the claims 7 to 10, **characterised in that** at least one electrical strip conductor (2) is used having two opposite faces (21, 22), one of which, referred to as the first, bears a layer (3) of material permitting a high degree of electrochemical activity, and the other (22), referred to as the second, likewise bears a layer (3) of material permitting a high degree of electrochemical activity, itself covered by a layer element (4), referred to as separator element (4).

13. Method of production according to claim 11 or 12, **characterised in that** at least one electrical strip conductor (2) is used whose layers (3) of material permitting a high degree of electrochemical activity and whose separator element (4), which equip the two opposite faces (21, 22), extend from one of the two lateral borders (2D, 2E) over a transverse dimension substantially equal to the distance (D) which separates the two end faces (1B, 1C) of the device (1).

## Patentansprüche

1. Vorrichtung (1) zum Speichern elektrischer Energie, die aus einer im Wesentlichen zylindrischen Wicklung von Bändern (2, 4) besteht, von denen mindestens ein Band (2) elektrisch leitend ist, wobei die genannte Vorrichtung (1) in Querrichtung durch eine im Wesentlichen zylindrische Seitenfläche (1A) und in Längsrichtung durch zwei voneinander abgewandte Stirnflächen (1B, 1C) begrenzt wird, die jeweils eine Kantenfläche (2B, 2C) des elektrisch leitenden Bandes (2) aufweisen, und Vorrichtung **gekennzeichnet dadurch,**
**dass** mindestens eine der Kantenflächen (2B, 2C) von mindestens einem elektrisch leitenden Band (2) eine Mehrzahl von Zähnen (5) aufweist, die derart angeordnet sind, dass sie mindestens an einer der Stirnflächen (1B, 1C) der Vorrichtung (1) mindestens eine Baugruppe bilden, in der sie in einer bestimmten, zu einer Tangentialebene der Zylinderfläche (1A) der genannten Vorrichtung annähernd senkrechten Richtung im Wesentlichen derart übereinander liegen, dass sie eine Gruppe von Elementen (5) zur elektrischen Verbindung mit einer Anschlussklemme (6) bilden und in der jedes Element (5) das ihn tragende, elektrisch leitende Bandes (2) fortsetzt,
**dass** einerseits jedes die Zähne (5) aufweisende, zur Bildung der Vorrichtung benutzte Band (2) eine Ausgangsbreite (L) hat, die größer ist als der die beiden Stirnflächen (1B, 1C) der Wicklung trennende Abstand (D), und dass andererseits die Zähne (5) durch das Ausschneiden von rechteckigen Lücken (7) in mindestens einem der Seitenränder (2D, 2E) des genannten elektrisch leitenden Bandes (2) erhalten werden.

2. Vorrichtung zum Speichern elektrischer Energie nach Anspruch 1, **dadurch gekennzeichnet, dass** einerseits in jeder Baugruppe, in der die Zähne (5) übereinander liegen, diese zumindest stellenweise derart mit ihren sich gegenüberliegenden Flächen (5A, 5B) dicht aneinander gedrückt werden, dass zwischen ihnen ein elektrische Kontakt hergestellt wird, und dass sie andererseits zumindest indirekt mit einer Klemme (6) zum externen elektrischen Anschluss der Vorrichtung (1) verbunden sind.

3. Vorrichtung zum Speichern elektrischer Energie nach Anspruch 2, **dadurch gekennzeichnet, dass** in jeder Baugruppe, in der die Zähne (5) übereinander liegen, diese durch Vernietung mittels eines Organs (8) dicht aneinander gedrückt werden, das durch die Stärke der Baugruppe aller genannten Zähne (5) führt.

4. Vorrichtung zum Speichern elektrischer Energie nach Anspruch 2, **dadurch gekennzeichnet, dass** in jeder Baugruppe, in der die Zähne (5) übereinander liegen, diese durch Verschweißung dicht aneinander gedrückt werden.

5. Vorrichtung zum Speichern elektrischer Energie nach einem der Ansprüche 2 bis 4, **dadurch gekennzeichnet, dass** sie mindestens eine Baugruppe von Zähnen (5) an jeder ihrer Stirnflächen (1B, 1C) aufweist und jede dieser Baugruppen mit einer an der genannten Fläche (1B, 1C) befindlichen Anschlussklemme (6) verbunden ist.

6. Vorrichtung zum Speichern elektrischer Energie nach einem der Ansprüche 2 bis 5, **dadurch gekennzeichnet, dass** sie Folgendes aufweist:
- ein elektrisch leitendes Bauteil (9), das im Wesentlichen axial zu der Wicklung angeordnet ist und ein Ende (9B, 9C) aufweist, das aus jeder der Stirnflächen der Vorrichtung (1B, 1C) herausragt,
- im Bereich einer ersten Fläche (1B) der Stirnflächen (1B, 1C) der Vorrichtung (1) ist mindestens eine erste Baugruppe von Zähnen (5) zumindest direkt an ein erstes Ende (9B) des elektrisch leitenden Teils (9) angeschlossen, das sich im Bereich dieser ersten Stirnfläche (1B) befindet,
- im Bereich einer zweiten Stirnfläche (1C) ist das zweite Ende (9B) des elektrisch leitenden Teils (9) seinerseits an eine erste Anschlussklemme (6) angeschlossen, während mindestens eine zweite, im Bereich dieser zweiten Stirnfläche (1C) befindliche Baugruppe von Zähnen (5) ihrerseits an eine zweite Anschlussklemme (6) angeschlossen ist,

7. Verfahren zur Herstellung einer Vorrichtung (1) zum Speichern elektrischer Energie, die einerseits in Querrichtung durch eine im Wesentlichen zylindrische Seitenfläche (1A) und in Längsrichtung durch zwei voneinander abgewandte, durch einen Abstand (D) getrennte Stirnflächen (1B, 1C) begrenzt wird, und die andererseits durch Aufwickeln von Bändern (2, 4) erhalten wird, darunter mindestens ein elektrisch leitendes Band (2), dessen zwischen zwei Seitenrändern (2D, 2E) begrenzte Ausgangsbreite (L) größer ist als der die beiden genannten, voneinander abgewandten Stirnflächen (1B, 1C) trennende Abstand (D), wobei dieses Verfahren **dadurch gekennzeichnet ist, dass** spätestens am Ende des Aufwickelns der Bänder (2, 4) die Zähne (5) durch Ausschneiden von rechteckigen Lücken (7) in mindestens einem der die Ausgangsbreite (L) von mindestens einem elektrisch leitenden Band (2) begrenzenden Seitenränder (2D, 2E) gebildet werden.

8. Herstellungsverfahren nach Anspruch 7, **dadurch gekennzeichnet, dass** man das Ausschneiden der rechteckigen, jeden Zahn (5) begrenzenden Lücken (7) deutlich vor dem Aufwickeln des Teils des elektrischen leitenden Bands (2), das mit diesem Zahn (5) versehenen werden soll, ausführt.

9. Herstellungsverfahren nach Anspruch 7, **dadurch gekennzeichnet, dass** man mindestens einen Teil der rechteckigen, die Zähne (5) begrenzenden Lücken (7) vor dem Aufwickeln von mindestens einem elektrisch leitenden Band (2) ausführen.

10. Herstellungsverfahren nach Anspruch 7, **dadurch gekennzeichnet, dass** man alle rechteckigen, die Zähne (5) begrenzenden Lücken (7) vor dem Aufwickeln von mindestens einem elektrisch leitenden Band (2) ausführt.

11. Verfahren zur Herstellung einer Vorrichtung (1) zum Speichern elektrischer Energie nach, die einerseits in Querrichtung durch eine im Wesentlichen zylindrische Seitenfläche (1A) und in Längsrichtung durch zwei voneinander abgewandte, durch einen Abstand (D) getrennte Stirnflächen (1B, 1C) begrenzt wird, und die andererseits durch Aufwickeln von Bändern (2, 4) erhalten wird, darunter mindestens ein elektrisch leitendes Band (2), dessen zwischen zwei Seitenrändern (2D, 2E) begrenzte Ausgangsbreite (L) größer ist, als der die beiden genannten, voneinander abgewandten Stirnflächen (1B, 1C) trennende Abstand (D), sowie erhalten durch eine Mehrzahl von Zähnen (5), die derart angeordnet sind, dass sie zumindest auf einer der Stirnflächen (1B, 1C) der Vorrichtung (1) mindestens eine Baugruppe bilden, in der sie in einer bestimmten, zu einer Tangentialebene der Zylinderfläche (1A) dergenannten Vorrichtung annähernd senkrechten Richtung im Wesentlichen derart übereinander liegen, dass sie eine Gruppe von Elementen (5) zur elektrischen Verbindung mit einer Anschlussklemme (6) bilden, wobei dieses Verfahren **dadurch gekennzeichnet ist, dass**:
- man mindestens ein elektrisch leitendes Band (2) verwendet, das zwei voneinander abgewandte Flächen (21, 22) aufweist, von denen eine (21), als erste bezeichnete Fläche eine Schicht (3) aus einem Material trägt, die eine große elektrochemische Aktivität ermöglicht, und die andere (22), als zweite bezeichnete Fläche ebenfalls eine Schicht (3) aus einem Material trägt, die eine große elektrochemische Aktivität ermöglicht, wobei sie ihrerseits mit einem als Trennelement (4) bezeichneten Schichtmaterial bedeckt ist.
- man die Aufwicklung der Bänder (2) um ein elektrisch leitendes Bauteil (9) herum vornimmt, welches so lang ist, dass es zumindest am Ende der Herstellung der Vorrichtung ein Ende (9B, 9C) aufweisen kann, das aus jeder der Stirnflächen (1B, 1C) der genannten Vorrichtung (1) herausragt,
- man spätestens nach dem Aufwickeln die Zähne (5) in beiden elektrisch leitenden Bändern (2) derart ausbildet, dass jede der beiden Stirnflächen (1B, 1C) der Vorrichtung (1) mit mindestens einer Baugruppe von Zähnen (5) versehen werden kann, und man die Zähne (5) durch das Ausschneiden von rechteckigen Lücken (7) in mindestens einem der beiden Seitenränder (2D, 2E) ausführt, welche die Ausgangsbreite (L) von mindestens einem elektrisch leitenden Band (2) begrenzen,
- man im Bereich der ersten Stirnfläche (1B) der Wicklung mindestens eine erste Baugruppe von Zähnen (5) an ein erstes Ende (9B) des elektrisch leitenden Teils (9) anschließt, das sich im Bereich dieser ersten Stirnfläche (1B) befindet,
- man im Bereich einer zweiten Stirnfläche (1C) einerseits das zweite Ende (9B) des elektrisch leitenden Teils (9) an eine erste Anschlussklemme (6) anschließt, und andererseits mindestens eine im Bereich dieser zweiten Stirnfläche (1C) befindliche Baugruppe von Zähnen (5) an eine zweite Anschlussklemme (6) anschließt.

12. Herstellungsverfahren nach einem der Ansprüche 7 bis 10, **dadurch gekennzeichnet, dass** man mindestens ein elektrisch leitendes Band (2) verwendet, das zwei voneinander abgewandte Flächen (21, 22) aufweist, von denen eine (21), als erste bezeichnete Fläche eine Schicht (3) aus einem Material trägt, die eine große elektrochemische Aktivität ermöglicht, und die andere (22), als zweite bezeichnete Fläche ebenfalls eine Schicht (3) aus einem Material trägt, die eine große elektrochemische Aktivität ermöglicht, wobei sie ihrerseits mit einem als Trennelement (4) bezeichneten Schichtmaterial (4) bedeckt ist.

13. Herstellungsverfahren nach einem der Ansprüche 11 bis 12, **dadurch gekennzeichnet, dass** man mindestens ein elektrisch leitendes Band (2) verwendet, wobei dessen aus einem große elektrochemische Aktivität ermöglichenden Material bestehenden Schichten (3) und dessen Trennelement (4), welche die beiden voneinander abgewandten Flächen (22, 22) bedecken, sich von einem der beiden Seitenränder (2D, 2E) aus auf die Querabmessung erstrecken, die im Wesentlichen gleich der Distanz (D) ist, welche die beiden Stirnseiten (1B, 1C) der Vorrichtung (1) trennt.
